**Europäisches Patentamt**

**European Patent Office**

**Office européen des brevets**

(19)

(11) Veröffentlichungsnummer : **0 060 335 B1**

(12) **EUROPÄISCHE PATENTSCHRIFT**

(45) Veröffentlichungstag der Patentschrift :
**28.12.83**

(21) Anmeldenummer : **81109069.5**

(22) Anmeldetag : **28.10.81**

(51) Int. Cl.³ : **C 09 K   3/34, C 08 G  77/14, G 01 K 11/00, G 02 F   1/133**

(54) **Flüssigkristalline Phasen aufweisende Zusammensetzungen auf Basis cyclischer Organopolysiloxane, ihre Herstellung und deren Verwendung.**

(30) Priorität : **16.03.81 DE 3110048**

(43) Veröffentlichungstag der Anmeldung :
**22.09.82 Patentblatt 82/38**

(45) Bekanntmachung des Hinweises auf die Patenterteilung : **28.12.83 Patentblatt 83/52**

(84) Benannte Vertragsstaaten :
**BE CH DE FR GB IT LI NL**

(56) Entgegenhaltungen :
**DE-A- 2 944 591**
**US-A- 3 385 878**
**CHEMICAL ABSTRACTS, Band 92, 1980, Columbus, Ohio, USA G. FINKELMANN et al. "Investigations in liquid crystalline polysiloxanes. I. Synthesis and characterization of linear polymers" Abstract No. 164 399 n**
**CHEMICAL ABSTRACTS, Band 89, 1978, Columbus, Ohio, USA F. VOLINO et al. "Octaphenylcyclotetra siloxane (OPCTS) : a new kind of mesophase ?" Abstract No. 189 221 z**

(73) Patentinhaber : **Consortium für elektrochemische Industrie GmbH**
**Zielstattstrasse 20**
**D-8000 München 70 (DE)**

(72) Erfinder : **Kreuzer, Franz-Heinrich, Dr. Dipl.-Chem.**
**Josef-Gerstner-Strasse 14 D**
**D-8033 Martinsried (DE)**
Erfinder : **Gawhary, Magdi El**
**Agnesstrasse 18/II**
**D-8000 München 40 (DE)**
Erfinder : **Winkler, Rainer**
**Oskar-M-Graf-Ring 24**
**D-8000 München 83 (DE)**
Erfinder : **Finkelmann, Heino, Dr. Dipl.-Chem.**
**Goslarsche Strasse 59**
**D-3392 Clausthal-Zellerfeld (DE)**

## Flüssigkristalline Phasen aufweisende Zusammensetzungen auf Basis cyclischer Organopolysiloxane, ihre Herstellung und deren Verwendung

Die Erfindung betrifft flüssigkristalline Phasen aufweisende Zusammensetzungen.

Es wurden gemäß DE-OS 29 44 591 bereits flüssigkristalline Phasen aufweisende Zusammensetzungen auf Basis von Organopolysiloxan, das chemisch gebundene mesogene Gruppen aufweist, vorgeschlagen.

Bei langkettigen Organopolysiloxanen, die mit mesogenen Gruppen modifiziert sind, bereitet die Überführung in den flüssigkristallinen Zustand oftmals insoweit Schwierigkeiten, als zum Erreichen eines hohen Ordnungsgrades längere Temperzeiten in Kauf zu nehmen sind. Kurzkettige Spezien der obengenannten Art orientieren sich zwar spontan — weisen jedoch zumeist unerwünschte klebrige Eigenschaften auf.

Aufgabe der Erfindung war es, solche flüssigkristallinen Phasen aufweisende Spezien zu finden, die bei Umgebungstemperatur klebfrei und dennoch, nach Überschreiten der Glastemperatur, leicht orientierbar, d. h. in einen flüssigkristallinen Zustand hoher Ordnung leicht überführbar, sind.

Es wurde nun gefunden, daß diese Aufgabe dadurch gelöst wird, daß als Rückgrat für die mesogenen Gruppen cyclischen Organopolysiloxane ausgewählt werden.

Gegenstand der Erfindung sind flüssigkristalline Zusammensetzungen, die wenigstens eine Verbindung enthalten aus der Gruppe der cyclischen Organopolysiloxane, die zumindest eine chemisch gebundene, mesogene Gruppe aufweisen.

Bevorzugt werden als cyclische Organopolysiloxane solche mit 3 bis 20, insbesondere solche mit 4 bis 7 Si-Ringatomen eingesetzt.

Weiterhin sind bevorzugt Zusammensetzungen, die nematische oder cholesterinische Eigenschaften besitzen. Die Erfindung umfaßt demnach insbesondre cyclische Organopolysiloxane mit nematischen oder cholesterinischen Eigenschaften, Gemische nematische, Gemische cholesterinische, Gemische nematische und cholesterinische Eigenschaften aufweisender cyclischer Organopolysiloxane und solche cyclische Organopolysiloxane, die am gleichen Molekül sowohl nematogene, wie cholesterinogene bzw. chirale Moleküle als Substituenten tragen.

Falls erwünscht, können die erfindungsgemäßen Zusammensetzungen ferner geradkettige, mesogene Gruppen aufweisende Organopolysiloxane enthalten.

Mit zumindest einer mesogenen Gruppe modifizierte cyclische Organopolysiloxanverbindungen können durchaus smektische oder z. B. chirale Eigenschaften aufweisen. Eine cholesterinische oder nematische Eigenschaften aufweisende Zusammensetzung, die eine derartige Komponente enthält, wird in der Weise formuliert, daß mindestens eine, an sich nematische Komponente mit der smektischen oder chiralen vermischt wird. Der Anteil der smektischen und der chiralen Komponente übersteigt normalerweise nicht 60 %.

Die erfindungsgemäßen Zusammensetzungen auf Basis cyclischen Organopolysiloxans, das mit mesogenen Gruppen modifiziert ist, weisen Glas- und Klärtemperaturen auf, die in etwa denen entsprechen, die bei analogen hochmolekularen Organopolysiloxanen beobachtet werden. Andererseits sind sie jedoch im Temperaturbereich zwischen Glas- und Klärtemperatur ebenso leicht orientierbar, wie mesogensubstituierte Organopolysiloxane mit geringer Kettenlänge. Der erfindungsgemäße Einsatz der cyclischen Organopolysiloxane als Rückgrat für die mesogenen Substituenten erbringt gegenüber geradkettigen Organopolysiloxanen mit höherem Polymerisationsgrad weiterhin den Vorteil, daß die Auswahl der mesogenen Gruppen bezüglich ihrer Kettenlänge, insbesondere des sich daraus ergebenden Abstands der eigentlichen mesogenen Funktion vom Organosiloxanrückgrat (Spacerlänge) im Hinblick auf leichte Orientierbarkeit, weniger kritisch ist. Weiterhin vorteilhaft an den erfindungsgemäßen Zusammensetzungen ist ihrer Temperaturbeständigkeit und ihre chemische Stabilität.

Die Herstellung der erfindungsgemäßen Zusammensetzungen erfolgt durch Vermischen der Einzelkomponenten. Die Einzelkomponenten können verschiedene Ringgrößen aufweisen, sowie, wie bereits oben erwähnt, verschiedene mesogene Gruppen tragen.

Eine erfindungsgemäße flüssigkristalline Phasen aufweisende Einzelkomponente ist beispielsweise durch Pfropfreaktion mesogener Moleküle am cyclischen Polysiloxanrückgrat zugänglich. Ein anderer Reaktionsweg eröffnet sich durch Hydrolyse von mit mesogenen Gruppen substituierten Organodichlorsilanen.

Ein bevorzugtes Herstellungsverfahren der Einzelkomponenten ist dadurch gekennzeichnet, daß cyclische Poly-Organo-Wasserstoff-Siloxane in etwa äquimolaren Mengen, bezogen auf die Menge Siloxan-Wasserstoffs, mit vinylsubstituierten mesogenen Molekülen, ggf. in Lösung, in Anwesenheit von, die Anlagerung von Si-gebundenem Wasserstoff an aliphatische Mehrfachbindungen förderndem Katalysator, umgesetzt werden.

Die Aufpfropfreaktion kann, ohne daß dies zwinged erforderlich wäre, in Lösungsmitteln vorgenommen werden, wie beispielsweise Petroläther, Benzol, Toluol, Tetrahydrofuran oder Methylenchlorid.

Die Reaktionstemperatur ist kein entscheidender Reaktionsparameter. Der bevorzugte Bereich beträgt 20 bis 150 °C.

Die bevorzugte Ringgröße der erfindungsgemäß einzusetzenden cyclischen Organo-Wasserstoff-Polysiloxane ist durch die Anzahl von 3 bis 20 Si-Ringatomen pro Molekül gegeben. Als organische Reste dieser cyclischen Polysiloxane sind, der leichten chemischen Zugänglichkeit wegen, Methylgruppen bevorzugt. Es kommen jedoch auch andere Alkylgruppen wie Ethyl, Propyl sowie aromatische Substituenten, wie z. B. der Phenylrest, in Betracht.

Der Anteil an Si-H-Bindung im Ausgangsmaterial sollte aus praktischen Gründen nicht die Anzahl an Siliciumatomen überschreiten, da bei zu hohem Si-H-Gehalt oft Wasserstoffentwicklung bei der Pfropfreaktion beobachtet wird, die zu nicht reproduzierbaren Ergebnissen führen könnte. Im übrigen wird der sinnvolle Si-H-Anteil mit der sich daraus ergebenden Besetzungsdichte an mesogenen Gruppen durch anwendungsspezifische Erfordernisse, wie auch durch solche Eigenschaften der mesogenen Moleküle, wie Platzbedarf oder Stärke der kooperativen Wechselwirkung zwischen Polymerrückgrat und mesogenen Molekülen, sowie zwischen benachbarten mesogenen Molekülen bestimmt.

Als mesogene Moleküle kommen grundsätzlich alle, mesogene Eigenschaften aufweisenden Verbindungen in Betracht, soweit sie in Bezug auf die Pfropfreaktion auf das cyclische Organopolysiloxanrückgrat die funktionelle Vinylgruppe besitzen.

Mesogene Eigenschaften aufweisende Funktionen sind bereits in großem Umfang in der Literatur beschrieben. Es sei in diesem Zusammenhang auf eine zusammenfassende Darstellung verwiesen, von Dietrich Demus et al, « Flüssige Kristalle in Tabellen », VEB Deutscher Verlag für Grundstoffindustrie, Leipzig, 1974.

Insbesondere kommen Vinylgruppen aufweisende Derivate des Cyclohexans, wie Cyclohexyl-Carbonsäure-Phenylester, Cyclohexyl-Phenyl-Ether, Cyclohexyl-Benzole, Cyclohexyl-Carbonsäure-Cyclohexylester, Bi-Cyclohexyl-Derivate in Betracht. Weiterhin sind zu nennen Vinylgruppen aufweisende Derivate des Stilbens, Derivate des Benzoesäurephenylesters, Benzylidenaniline, Derivate des Azobenzols, Derivate des Azoxybenzols, Alkyl- und Alkoxyderivate des Biphenyls, Schiff'sche Basen und Steroide, wie Derivate des Cholesterins und des Cholestans.

Oftmals sind chirale Strukturen als mesogene Moleküle, die für sich, d. h. ohne auf das Cyclopolysiloxanrückgrat aufgepfropft zu sein, keine mesogenen Eigenschaften aufweisen, geeignet, zusammen mit nematogenen Komponenten cholesterinische Phasen aufweisende Zusammensetzungen zu ergeben.

Zwischen der eigentlichen mesogenen Funktion und dem Cycloorganopolysiloxanrückgrat sollte eine flexible Verbindung bestehen, die am besten durch 3 bis 6 Methylengruppen als Bindeglied zwischen dem Siloxanrückgrat und der eigentlichen mesogenen Funktion, realisiert wird.

Oft ist es aus anwendungsspezifischen Gründen erwünscht, daß die mesogenen Moleküle polare Gruppen, wie beispielsweise die Nitrilgruppe enthalten, um einen hohen dielektrischen Anisotropieeffekt zu erhalten.

Als Katalysatoren kommen alle, auch bereits bisher verwendeten Katalysatoren für die Anlagerung von Si-gebundenem Wasserstoff an aliphatische Mehrfachbindungen in Betracht. Beispiele hierfür sind feinverteiltes, metallisches, ggf. auf Träger, wie Aktivkohle aufgebrachtes Platin, Ruthenium, Rhodium sowie Verbindungen und Komplexe dieser Elemente, z. B. $PtCl_4$, $H_2PtCl_6 \cdot 6H_2O$, $Na_2PtCl_4 \cdot 4H_2O$, Pt-Olefin-, Pt-Alkohol-, Pt-Ether-Komplexe u. a.

Die erfindungsgemäßen flüssigkristalline Phasen aufweisenden Zusammensetzungen lassen sich zur Temperaturindikation einsetzen. Derartige Anwendungen ergeben sich beispielsweise auf dem Sektor der Medizin, der zerstörungsfreien Werkstoffprüfung (Wärmeflußverfahren) oder bei der Lösung von Prüfproblemen in der Mikroelektronik. Ein wichtiges Anwendungsfeld eröffnet sich ferner in der optischen Anzeige elektrischer und magnetischer Felder (Optoelektronik). Weitere Anwendungsmöglichkeiten erschließen sich auf dem Gebiet der elektrographischen Verfahren, der Lichtmodulation oder beispielsweise der Verwendung als Bestandteil von Polarisationsfolien. Insbesondere eignen sich die erfindungsgemäßen Zusammensetzungen aufgrund ihres günstigen Fließverhaltens zur Beschichtung von Folien. Hierzu genügt es, sie bei Temperaturen im Bereich zwischen Glas- und Klärtemperatur auf die Folien aufzuwalzen. Bei diesem Vorgang wird gleichzeitig eine Orientierung der Moleküle in einem flüssigkristallinen Zustand hoher Ordnung erreicht, der auch beim Abkühlen unter die Glastemperatur erhalten bleibt. Zur Erläuterung der Erfindung dienen folgende Beispiele :

Beispiel 1

Pfropfreaktionsprodukt von 4-Propen-2-oxy-benzoesäure-4'-phenylphenylester auf Pentamethylcyclopentasiloxan

a) Allylbromid wird mit 4-Hydroxybenzoesäuremethylester in verdünnter Natronlauge angesetzt. Anschließend wird verseift, die freie Säure gewonnen und schließlich die getrocknete Säure mit Thionylchlorid in das entsprechende Säurechlorid übergeführt. Es wird Allyloxybenzoylchlorid ($K_{p\,0,1}$ 113 bis 115 °C) erhalten.

b) 58,8 g Allyloxybenzoylchlorid werden mit 51 g 4-Phenylphenol in 50 g Toluol in Gegenwart von 0,5 g Dimethylformamid 4 Stunden auf 80 °C erhitzt. Es bildet sich unter HCl-Entwicklung 4-Propen-2-oxy-benzoesäure-4'-phenylpehnylester (I). Das Reaktionsgemisch wird zum Schluß eingeengt und als Toluol umkristallisiert. Die Ausbeute beträgt 81 g entsprechend 82 % d. Th. Schmelzpunkt 142 °C.

c) 6,6 g (I) werden mit 1,2 g Pentamethylcyclopentasiloxan in 20 g Methylenchlorid in Gegenwart von 100 ppm Platin in Form des Dicyclopentadienyl-Pt-dichlorids 3 Stunden unter Rückfluß gekocht. Auschließend wird das Methylenchlorid abgezogen und das Zielprodukt im Vakuum getrocknet. Es weist eine Glastemperatur von 56 °C auf und geht bei 172 °C in den isotropen Zustand über.

Beispiel 2

Pfropfreaktionsprodukt von 4-Propen-2-oxy-benzoesäure-4'-phenyl-phenylester und 4-Propen-2-oxy-benzoesäurecholesterylester auf Pentamethyl-cyclo-pentasiloxan

a) 4-Propen-2-oxy-benzoesäurecholesterylester (II) wird analog (I) gemäß Beispiel 1 durch Umsetzen von Allyloxybenzoylchlorid mit Cholesterin in Gegenwart von Dimethylformamid erhalten. Das Produkt weist einen Klärpunkt von 230 °C auf.

b) 5 g (I) und 4,46 g (II) werden mit 1,82 g Pentamethyl-cyclopentasiloxan wie in Beispiel 1 beschrieben, umgesetzt.

Das Zielprodukt weist eine Glastemperatur von 48 °C auf und geht bei 190 °C in den isotropen Zustand über. Das pro Molekül zwei verschiedene mesogene Gruppen aufweisende Cycloorganopolysiloxan wird zwischen zwei Glasplatten gebracht und auf 140 °C erwärmt. Bei leichtem Verschieben der Glasplatten gegeneinander tritt spontane Orientierung auf, die sich durch eine gelb-grüne Reflexionsfarbe ($\lambda_{max}$ = 632 bis 580 Nanometer) zu erkennen gibt.

Beispiel 3

Das cyclische, mit mesogenen Gruppen modifizierte Siloxan gemäß Beispiel 2 wird bei einer Temperatur von 140 °C mittels einer gummibeschichteten Walze auf eine Kunststoffolie aufgebracht. Es entsteht ein Film, der ohne weitere Hilfsmaßnahmen die gelb-grüne Reflexionsfarbe der cholesterinisch-nematischen Phase zeigt und sie auch nach Abkühlen auf Raumtemperatur beibehält. Der Film ist klebfrei.

**Ansprüche**

1. Flüssigkristalline Phasen aufweisende Zusammensetzungen, die wenigstens eine Verbindung enthalten aus der Gruppe der cyclischen Organopolysiloxane, die zumindest eine chemisch gebundene mesogene Gruppe aufweisen.

2. Flüssigkristalline Phasen aufweisende Zusammensetzungen nach Anspruch 1, die nematische oder cholesterinische Phasen aufweisen.

3. Flüssigkristalline Phasen aufweisende Zusammensetzungen nach Anspruch 1, die cyclisches Organopolysiloxan enthalten, das intramolekular chemisch gebundene nematogene und cholesterogene bzw. chirale Moleküle aufweist.

4. Verfahren zur Herstellung von Einzelkomponenten nach Anspruch 1, dadurch gekennzeichnet, daß cyclische Poly-Organo-Wasserstoff-Siloxane in etwa äquimolaren Mengen, bezogen auf die Menge Siloxan-Wasserstoffs, mit vinylsubstituierten mesogenen Molekülen, ggf. in Lösung, in Anwesenheit von, die Anlagerung von Si-gebundenem Wasserstoff an aliphatische Mehrfachbindungen förderndem Katalysator, umgesetzt werden.

5. Verwendung von flüssigkristalline Phasen aufweisenden Zusammensetzungen nach Anspruch 1 auf den Gebieten der Opto-Elektronik, der Informationsspeicherung, der Prüftechnik, der Temperaturindikation oder in elektrographischen Verfahren.

6. Verwendung von flüssigkristalline Phasen aufweisenden Zusammensetzungen nach Anspruch 1 zur Beschichtung von Folien.

**Claims**

1. Compositions having liquid crystal phases which contain at least one compound selected from the group consisting of cyclic organopolysiloxanes that have at least one chemically bonded mesomorphic group.

2. Compositions having liquid crystal phases according to claim 1, which have nematic or cholesterolic phases.

3. Compositions having liquid crystal phases according to claim 1, which contain cyclic organopolysiloxane that has intramolecularly chemically bonded nematomorphic and cholesterolmorphic or chiral molecules.

4. Process for the manufacture of individual components according to claim 1, characterised in that cyclic polyorganohydrogenosiloxanes are reacted, in approximately equimolar amounts with respect to the amount of siloxane-hydrogen, with vinyl-substituted mesomorphic molecules, if desired in solution, in the presence of a catalyst promoting the addition of Si-bonded hydrogen to aliphatic multiple bonds.

5. Use of compositions having liquid crystal phases according to claim 1 in the fields of optoelectronics, information storage, testing techniques, temperature indication, and electrographic processes.

6. Use of compositions having liquid crystal phases according to claim 1 for coating sheet materials.

**Revendications**

1. Compositions présentant des phases mésomorphes, caractérisées en ce qu'elles contiennent au moins un composé du groupe des polyorganosiloxanes cycliques, qui présentent au moins un groupe mésogène chimiquement lié.

2. Compositions présentant des phases mésomorphes selon la revendication 1, caractérisées en ce qu'elles présentent des phases nématiques ou cholestériques.

3. Compositions présentant des phases mésomorphes selon la revendication 1, caractérisées en ce qu'elles contiennent un polyorganosiloxane cyclique qui présente des molécules à liaison chimique intramoléculaire, némotogènes et cholestérogènes ou chirales.

4. Procédé de préparation des constituants selon la revendication 1, caractérisé en ce que l'on fait réagir des polyorgano-hydrogéno-siloxanes cycliques en des quantités approximativement molaires par rapport à la quantité de siloxane-hydrogène sur des molécules vinyl-substituées mésogènes éventuellement en solution, en présence d'un catalyseur accélérant la fixation d'hydrogène lié au Si sur des liaisons multiples aliphatiques.

5. Utilisation de compositions présentant des phases mésomorphes selon la revendication 1, caractérisée en ce qu'elle concerne le domaine de l'optoélectronique, de la mémorisation des informations, de la technique des contrôles, de l'indication de température ou des procédés électrographiques.

6. Utilisation de compositions présentant des phases mésomorphes selon la revendication 1, caractérisée en ce qu'elle concerne l'enduction de feuilles.